# EUROPÄISCHE PATENTSCHRIFT

(11) **EP 1 112 891 B1**
(45) Veröffentlichungstag und Bekanntmachung des Hinweises auf die Patenterteilung: **29.09.2004**
(21) Anmeldenummer: 00127285.5
(22) Anmeldetag: 19.12.2000
(51) Int. Cl.: B60N 2/427, B60N 2/42

(54) **Fahrzeugsitz**
Vehicle seat
Siège de véhicule

(30) Priorität: 27.12.1999 DE 29922856 U
(43) Veröffentlichungstag der Anmeldung: 04.07.2001
(73) Patentinhaber: TRW Automotive GmbH, 73553 Alfdorf (DE)
(72) Erfinder: Heilig, Alexander, 73550 Wissgoldingen (DE); Herpich, Thomas, 73066 Uhingen-Sparwiesen (DE)
(74) Vertreter: Sulzbach, Werner, Dipl.-Chem. Dr.

(56) Entgegenhaltungen:
- WO-A-94/00704
- WO-A-97/43142
- DE-A- 19 541 999
- DE-A- 19 702 995
- DE-C- 19 548 714
- DE-U- 29 610 078
- US-A- 5 695 242

## Beschreibung

Die vorliegende Erfindung betrifft einen Fahrzeugsitz mit einem Sitzteil und einer in das Sitzteil integrierten Sitzwanne.

Bei einem Fahrzeugfrontalaufprall werden der Oberkörper und der Kopf eines Fahrzeuginsassen nach vorn verlagert, bis die Vorwärtsbewegung des Insassen von einem Rückhaltegurt begrenzt wird. Beim anschließenden Rückstoß prallen der Oberkörper und der Kopf gegen die Rückenlehne bzw. die Kopfstütze des Fahrzeugsitzes. Für die Rückhaltung des angegurteten Fahrzeuginsassen ist darüber hinaus die Konstruktion der in das Sitzteil des Fahrzeugsitzes integrierten Sitzwanne von besonderer Bedeutung. Deren Gestaltung kann die Funktion des Rückhaltegurtes dahingehend unterstützen, daß der sogenannte "Submarining-Effekt" vermieden wird. Dabei kann ein Fahrzeuginsasse bei einem Fahrzeugaufprall so tief in das Sitzteil des Fahrzeugsitzes eintauchen, daß der Rückhaltegurt in den Bereich des Abdomens des Insassen rutscht, wo er schwere innere Verletzungen hervorrufen kann. Dieser Effekt wird herkömmlicherweise dadurch vermieden, daß die Sitzwanne im Sitzschaumunterbau des Fahrzeugsitzes eine starre rampenförmige Struktur aufweist, die die Rotation des Beckenknochens des Fahrzeuginsassen so beeinflußt, daß ein Abrutschen des Rückhaltegurtes in den Abdominalbereich verhindert wird.

Die starre Struktur der Sitzwanne kann allerdings auch im normalen Fahrzeugbetrieb spürbar sein und somit die Komforteigenschaften des Fahrzeugsitzes verringern.

Aus dem deutschen Gebrauchsmuster DE 296 10 078 U ist ein gattungsgemäßer Fahrzeugsitz bekannt, der eine Stelleinrichtung mit einer im Sitzteil verschwenkbar angeordneten Sitzwanne umfaßt. Im Falle eines Fahrzeugfrontalaufpralls wird der Neigungswinkel der an die Sitzwanne angrenzenden Sitzfläche durch das Verschwenken der Sitzwanne vergrößert.

Die US-A-5 695 242 beschreibt einen Fahrzeugsitz mit einer Vorrichtung, mit der im Kollisionsfall ein vorderer Teil des Sitzkissens angehoben werden kann. Die Vorrichtung kann ein Luftsack, ein mechanisches, unter einer Federlast stehendes Teil oder eine pyrotechnisch angetriebene Vorrichtung sein. Die Vorrichtung bewirkt ein Anheben der Beine des Fahrzeuginsassen und vermindert somit die Verletzungsgefahr im Bereich der unteren Extremitäten.

Die bekannten Systeme erfordern somit das Vorhandensein zahlreicher mechanischer Bauteile und Komponenten, deren Funktionssicherheit nicht immer gewährleistet werden kann.

Der Erfindung liegt demgegenüber die Aufgabe zugrunde, die oben genannten Nachteile zu vermeiden und einen Fahrzeugsitz bereitzustellen, mit dem der oben erläuterte "Submarining-Effekt" bei großen und kleinen Insassen in unterschiedlichen Aufprallsituationen vermieden werden kann.

Gelöst wird diese Aufgabe durch einen Fahrzeugsitz mit einem Sitzteil und einer in das Sitzteil integrierten Sitzwanne, der dadurch gekennzeichnet ist, daß die Sitzwanne wenigstens teilweise mit einer unter Bildung einer Sitzrampe aktivierbaren viskosen Masse befüllt ist.

Als viskose Massen eignen sich insbesondere solche Massen, die durch Anlegen eines elektrischen oder magnetischen Spannungsfeldes einer hohen Viskositätsänderung unterliegen. Diese Massen werden nachfolgend auch als elektroviskose Massen bezeichnet. In vorteilhafter Weise bewirkt die Viskositätsänderung eine Verfestigung der viskosen Masse.

Die erfindungsgemäß geeigneten elektro-viskosen Massen zeigen elektrorheologisches oder magnetorheologisches Verhalten und sind beispielsweise aus dem Bereich der lenkunterstützenden Techniken bekannt. Geeignete elektrorheologische oder magnetorheologische Fluide umfassen in Siliconöl dispergierte, weiche Polymerteilchen oder magnetisch weiche Carbonyleisen-Mikrokügelchen in synthetischen Kohlenwasserstoffen oder Fluiden auf Siliconbasis.

Die in den Fahrzeugsitz bzw. die Sitzwanne eingebrachte elektroviskose Masse ist von dem Fahrzeuginsassen bei nicht angelegter Spannung nicht spürbar. Der Fahrzeugsitz weist also gegenüber den mit starren Sitzrampen versehenen Sitzen deutlich verbesserte Komforteigenschaften auf. Wird die in die Sitzwanne eingebrachte viskose Masse beispielsweise durch Anlegen eines elektrischen oder magnetischen Feldes aktiviert, entsteht mit der Versteifung der viskosen Masse eine Sitzrampe, mit der der sogenannte "Submarining-Effekt" vermieden wird.

Die Aktivierung der viskosen Masse kann aufgrund der sich sehr schnell einstellenden Zustandsänderung bzw. Viskositätsänderung während des Rückhaltevorgangs erfolgen. Die Ansprechzeiten der elektroviskosen Massen liegen bevorzugt zwischen 2 und 5 ms. Darüber hinaus kann die viskose Masse aber auch durch eine vorausschauende Sensorik im Fahrzeug reversibel angesprochen werden. Die an die Aktivierung zu stellenden zeitlichen Anforderungen sind bei dieser Ausführungsform deutlich geringer.

Die Aktivierung der viskosen Masse erfolgt bevorzugt formvorgegeben, d.h. die viskose Masse ist in ein Kissen eingebracht, welches bereits die Form der nach Aktivierung entstehenden Sitzrampe aufweist. Bei einer alternativen Ausführungsform kann die Aktivierung der viskosen Masse auch anpassend erfolgen, d.h. die Kontur der Masse bzw. des Kissens wird während der Aktivierung der viskosen Masse nicht verändert. Mit dieser Ausführungsform lassen sich besonders hohe Komforteigenschaften erzielen.

Eine Anpassung der Sitzrampeneigenschaften an die Größe des Fahrzeuginsassen läßt sich außerdem durch Verwendung von viskosen Massen erzielen, bei denen die Viskositätsänderung in Abhängigkeit von der Belastungsgeschwindigkeit erfolgt. Die Viskositätsänderung ist dann bei kleineren Personen weniger ausgeprägt als bei größeren Personen, da sich die letzteren mit einer höheren Geschwindigkeit über den Sitz bewegen. Dieser Ausführungsform liegt somit eine Aktivierung der viskosen Masse durch auf die Masse einwirkende Beschleunigungskräfte zugrunde.

Weitere Vorteile der Erfindung ergeben sich aus der nachfolgenden Beschreibung einer besonderen Ausführungsform in Verbindung mit der Zeichnung.

In der Zeichnung zeigt:

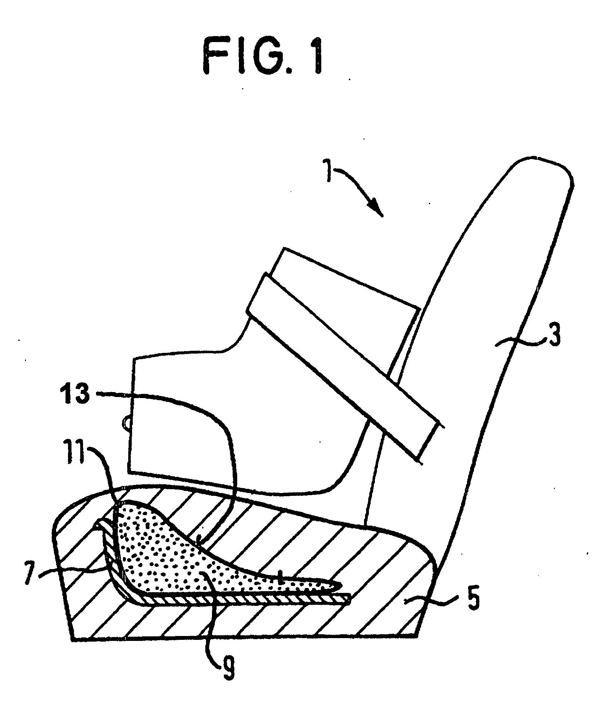

- Figur 1 eine schematische Darstellung eines Fahrzeugsitzes gemäß der Erfindung.

Der in Figur 1 gezeigte Fahrzeugsitz 1 umfaßt eine Rückenlehne 3 und ein Sitzteil 5. In das Sitzteil 5 ist eine Sitzwanne 7 integriert. Die Sitzwanne 7 ist mit einer viskosen Masse 9 befüllt, die beispielsweise durch Anlegen einer elektrischen Spannung aktiviert werden kann und sich infolge dieser Aktivierung unter Bildung einer Sitzrampe 13 verfestigt.

Bei der hier gezeigten Ausführungsform erfolgt diese Verfestigung formvorgegeben, d.h. die viskose Masse 9 ist in ein Kissen 11 eingebracht, welches im wesentlichen bereits die Form der sich nach der Aktiverung bildenden Sitzrampe 13 aufweist. Die viskose Masse zeigt in diesem Fall formspeicherndes Verhalten und verfestigt sich nach der Aktivierung in der durch das Kissen 11 vorgegebenen Form.

Die Verfestigung kann alternativ dazu auch anpassend, d.h. ohne Konturänderung erfolgen. Die in das Sitzkissen 11 eingebrachte viskose Masse behält in diesem Fall ihre durch die Sitzhaltung des Insassen vorgegebene Form auch nach der Aktivierung bei.

Die Aktivierung der viskosen Masse erfolgt in vorteilhafter Weise durch Zuführen von elektrischer Energie, beispielsweise durch Anlegen einer elektrischen Spannung.

Nachfolgend wird die Funktionsweise der erfindungsgemäßen Vorrichtung beschrieben:

Im Falle eines Fahrzeugaufpralls liefert eine im Fahrzeug angebrachte Sensorik einen elektrischen Impuls, der wiederum die Aktivierung der in die Sitzwanne 7 des Fahrzeugsitzes 1 eingebrachten viskosen Masse 9 bewirkt. Die viskose Masse verfestigt sich infolge dieser Aktivierung unter Ausbildung einer Sitzrampe 13. Diese Sitzrampe 13 ist im wesentlichen keilförmig gebildet, wobei der im Vorderteil des Fahrzeugsitzes gelegene Bereich der Sitzrampe erhöht und in Richtung auf den hinteren Teil des Sitzes geneigt ist. Die Ausbildung der Sitzrampe 13 wirkt einer Vorwärtsbewegung des Beckenknochens des Fahrzeuginsassen entgegen und verhindert somit ein Abrutschen des angelegten Rückhaltegurtes in den Abdominalbereich des Fahrzeuginsassen.

Mit dem erfindungsgemäßen Fahrzeugsitz wird eine Rückhaltevorrichtung bereitgestellt, die sich in optimaler Weise an verschiedene Aufprallsituationen anpassen läßt und geeignet ist, auch bei Insassen verschiedener Größe ein Auftreten von inneren Verletzungen im Abdomialbereich zu verhindern.

## Patentansprüche

1. Fahrzeugsitz (1) mit einem Sitzteil (5) und einer in das Sitzteil (5) integrierten Sitzwanne (7), **dadurch gekennzeichnet, daß** in der Sitzwanne (7) eine viskose Masse (9) angeordnet ist, wobei die viskose Masse (9) unter Bildung einer Sitzrampe (13) aktivierbar ist.

2. Fahrzeugsitz nach Anspruch 1, **dadurch gekennzeichnet, daß** die viskose Masse (9) unter Viskositätsänderung aktivierbar ist.

3. Fahrzeugsitz nach Anspruch 2, **dadurch gekennzeichnet, daß** die Viskositätsänderung eine Verfestigung ist.

4. Fahrzeugsitz nach Anspruch 3, **dadurch gekennzeichnet, daß** die Verfestigung formvorgegeben erfolgt.

5. Fahrzeugsitz nach Anspruch 3, **dadurch gekennzeichnet, daß** die Verfestigung ohne Konturänderung erfolgt.

6. Fahrzeugsitz nach einem der Ansprüche 1 bis 5, **dadurch gekennzeichnet, daß** die viskose Masse (9) durch elektrische Energie aktivierbar ist.

7. Fahrzeugsitz nach Anspruch 6, **dadurch gekennzeichnet, daß** die viskose Masse ein elektrorheologisches Fluid ist.

8. Fahrzeugsitz nach Anspruch 7, **dadurch gekennzeichnet, daß** die viskose Masse weiche, in einem Siliconöl dispergierte Polymerteilchen umfaßt.

9. Fahrzeugsitz nach einem der Ansprüche 1 bis 5, **dadurch gekennzeichnet, daß** die viskose Masse durch Anlegen eines Magnetfeldes aktivierbar ist.

10. Fahrzeugsitz nach Anspruch 9, **dadurch gekennzeichnet, daß** die viskose Masse ein magnetorheologisches Fluid ist.

11. Fahrzeugsitz nach Anspruch 10, **dadurch gekennzeichnet, daß** die viskose Masse magnetisch weiche Carbonyleisen-Mikrokügelchen in synthetischen Kohlenwasserstoffen oder Siliconöl umfaßt.

12. Fahrzeugsitz nach einem der Ansprüche 1 bis 11, **dadurch gekennzeichnet, daß** die viskose Masse (9) in ein in der Sitzwanne (7) angeordnetes Kissen (11) eingebracht ist.

13. Verwendung einer viskosen Masse mit elektrorheologischen oder magnetorheologischen Eigenschaften als Bestandteil eines Fahrzeugsitzes gemäß den Ansprüchen 1 bis 12.

## Claims

1. A vehicle seat (1) comprising a seat portion (5) and a seat pan (7) integrated in the seat portion (5), **characterized in that** a viscous mass (9) is arranged in the seat pan (7), the viscous mass (9) being activable to form a seat ramp (13).

2. The vehicle seat as claimed in claim 1, **characterized in that** the viscous mass (9) is activable to undergo a change in viscosity.

3. The vehicle seat as claimed in claim 2, **characterized in that** the change in viscosity is a solidification.

4. The vehicle seat as claimed in claim 3, **characterized in that** the solidification is effected so as to result in a predetermined shape.

5. The vehicle seat as claimed in claim 3, **characterized in that** the solidification is effected without a change in contour.

6. The vehicle seat as claimed in any of claims 1 to 5, **characterized in that** the viscous mass (9) is activable by electric energy.

7. The vehicle seat as claimed in claim 6, **characterized in that** the viscous mass is an electrorheological fluid.

8. The vehicle seat as claimed in claim 7, **characterized in that** the viscous mass comprises soft polymer particles dispersed in a silicone oil.

9. The vehicle seat as claimed in any of claims 1 to 5, **characterized in that** the viscous mass is activable by applying a magnetic field.

10. The vehicle seat as claimed in claim 9, **characterized in that** the viscous mass is a magnetorheological fluid.

11. The vehicle seat as claimed in claim 10, **characterized in that** the viscous mass comprises magnetically soft microspheres of carbonyl iron in synthetic hydrocarbons or silicone oil.

12. The vehicle seat as claimed in any of claims 1 to 11, **characterized in that** the viscous mass (9) is incorporated in a cushion (11) arranged in the seat pan (7).

13. Use of a viscous mass having electrorheological or magnetorheological properties as a component of a vehicle seat as claimed in claims 1 to 12.

## Revendications

1. Siège de véhicule (1) comportant une partie de siège (5) et une cuve de siège (7) intégrée dans la partie de siège (5), **caractérisé en ce qu'**une masse visqueuse (9) est agencée dans la cuve de siège (7), la masse visqueuse (9) étant activable en formant une rampe de siège (13).

2. Siège de véhicule selon la revendication 1, **caractérisé en ce que** la masse visqueuse (9) est activable en modifiant la viscosité.

3. Siège de véhicule selon la revendication 2, **caractérisé en ce que** la modification de la viscosité est un durcissement.

4. Siège de véhicule selon la revendication 3, **caractérisé en ce que** le durcissement a lieu en fonction de la forme prédéterminée.

5. Siège de véhicule selon la revendication 3, **caractérisé en ce que** le durcissement a lieu sans modification de contour.

6. Siège de véhicule selon l'une des revendications 1 à 5, **caractérisé en ce que** la masse visqueuse (9) est activable par énergie électrique.

7. Siège de véhicule selon la revendication 6, **caractérisé en ce que** la masse visqueuse est un fluide électro-rhéologique.

8. Siège de véhicule selon la revendication 7, **caractérisé en ce que** la masse visqueuse contient des particules de polymère souples dispersées dans une huile de silicone.

9. Siège de véhicule selon l'une des revendications 1 à 5, **caractérisé en ce que** la masse visqueuse est activable par l'application d'un champ magnétique.

10. Siège de véhicule selon la revendication 9, **caractérisé en ce que** la masse visqueuse est un fluide magnéto-rhéologique.

11. Siège de véhicule selon la revendication 10, **caractérisé en ce que** la masse visqueuse contient des microbilles de fer-carbonyle magnétiquement souples dans des hydrocarbures synthétiques ou dans de l'huile de silicone.

12. Siège de véhicule selon l'une des revendications 1 à 11, **caractérisé en ce que** la masse visqueuse (9) est introduite dans un coussin (11) agencé dans la cuve de siège (7).

13. Utilisation d'une masse visqueuse à propriétés électro-rhéologiques ou magnéto-rhéologiques, à titre de composant d'un siège de véhicule selon les revendications 1 à 12.
